(19)

Europäisches
Patentamt
European
Patent Office
Office européen
des brevets

(11) **EP 4 765 011 A1**

(12) **EUROPEAN PATENT APPLICATION**

(43) Date of publication:
    **24.06.2026 Bulletin 2026/26**

(51) International Patent Classification (IPC):
    *G06T 3/4053* (2024.01)     *G01N 21/64* (2006.01)
    *G02B 21/16* (2006.01)

(21) Application number: **25219273.7**

(22) Date of filing: **28.11.2025**

(52) Cooperative Patent Classification (CPC):
    **G01N 21/6408; G01N 21/6458; G02B 21/0076;
    G02B 21/16;** G01N 21/6445

(84) Designated Contracting States:
    **AL AT BE BG CH CY CZ DE DK EE ES FI FR GB
    GR HR HU IE IS IT LI LT LU LV MC ME MK MT NL
    NO PL PT RO RS SE SI SK SM TR**
    Designated Extension States:
    **BA**
    Designated Validation States:
    **GE KH LA MA MD TN**

(30) Priority: **20.12.2024 AT 602372024**

(71) Applicants:
    • **Universität Bielefeld
      Körperschaft des öffentlichen Rechts
      33615 Bielefeld (DE)**
    • **Universität Wien
      1010 Wien (AT)**

(72) Inventors:
    • **Huser, Thomas
      33824 Werther (DE)**
    • **Ortkraß, Hennig
      33619 Bielefeld (DE)**
    • **Juffmann, Thomas
      1220 Wien (AT)**
    • **Marchand, Raphaël
      94230 Cachan (FR)**

(74) Representative: **Michalski Hüttermann & Partner
    mbB
    Kaistraße 16A
    40221 Düsseldorf (DE)**

(54) **METHOD FOR EXAMINING A SAMPLE ENRICHED WITH AT LEAST ONE FLUOROPHORE
    AND A MICROSCOPY SYSTEM FOR THIS PURPOSE**

(57)     The invention relates to a method for examining a sample (1) enriched with at least one fluorophore, comprising the following steps:

exciting the sample (1) with a plurality of different interference patterns, such that the sample (1) emits in response to each interference pattern a respective fluorescence signal,

separating the respective fluorescence signal based on a degree of freedom of the respective fluorescence signal into a plurality of portions with different states of the degree of freedom,

modulating the states of the portions of each fluorescence signal within a predetermined time interval, such that each portion is detectable in the form of a modulated sub-portion and an unmodulated sub-portion,

detecting the modulated and unmodulated sub-portions of each portion in the form of a respective raw frame for each fluorescence signal, and

reconstructing an intensity image and a fluorescence lifetime value for each pixel of the intensity image comprising a plurality of pixels based on the raw frames. Thereby an improved microscopy method and system that enable high resolution fluorescence microscopy with fluorescence lifetime contrast is provided.

Fig. 1

**Description**

The present invention generally relates to the field of fluorescence microscopy and optical imaging of fluorophore labeled samples, and more particularly to techniques for high resolution fluorescence lifetime imaging using structured illumination in microscopy systems.

Fluorescence microscopy is currently regarded as a gold standard for molecular specific imaging of cell biology processes in cells and tissue. The method is fast, comparatively cost efficient and highly sensitive, and is therefore used in essentially all biomedical and pharmaceutical companies, in medical practices and pathology laboratories, in hospitals as well as in applied research at universities and non-university research institutes. Over the last decades, the underlying methods have been continuously refined, and these refinements have been translated very rapidly into products and commercial add-ons. A particularly fast growing field is the detection and quantification of protein transcription processes, which relies almost entirely on fluorescence microscopy. Fluorescence lifetime spectroscopy and fluorescence lifetime microscopy form an important subclass of fluorescence techniques and are used to detect molecular interactions with higher precision and sensitivity.

The ability to resolve dynamics on sub cellular length scales has fundamentally changed our understanding of biology and medicine. Fluorescence based measurements provide the sensitivity and specificity required to obtain spatio temporal information on internal cellular structure and on the distribution and interactions of various compounds. Super resolution microscopy techniques such as stimulated emission depletion microscopy, single molecule localization microscopy and related methods have pushed the achievable resolution down to the nanometer scale, typically at the expense of temporal resolution, field of view or light dose. For many live cell applications, super resolution structured illumination microscopy provides a favorable compromise between spatial and temporal resolution. Structured illumination microscopy enables approximately two fold improvement in spatial resolution over the diffraction limit and can operate at imaging rates on the order of tens to one hundred hertz with illumination intensities that are comparatively low. These properties make structured illumination microscopy a powerful tool to study, among others, nuclear pore complexes, liver endothelial cell fenestrations and a wide range of other dynamic structures in living cells.

Fluorescence microscopy has also been shown to provide additional biosensing capabilities based on the measurement of fluorophore brightness. Since fluorescence signals depend both on fluorophore brightness and on fluorophore concentration, which typically vary over time and between samples, quantitative biosensing can be performed using ratiometric approaches. By using excitation and or detection at multiple wavelengths, it is possible in principle to separate the contribution of fluorophore concentration from the contribution of fluorophore brightness in the measured signals. However, such approaches require careful calibration of excitation and detection efficiencies of the optical system. These efficiencies are both instrument dependent and sample dependent, which limits the robustness of the calibration. This is particularly challenging for thick live samples, in which excitation and detection efficiencies vary over time due to scattering and absorption in moving tissue.

Fluorescence lifetime imaging microscopy has been proposed to overcome some of these limitations, since the fluorescence lifetime is an intensive property of the fluorophore and does not depend on fluorophore concentration, thereby simplifying calibration procedures. For this reason, fluorescence lifetime imaging microscopy has been widely used for monitoring physicochemical parameters of cells and tissues, as well as biomolecular interactions, with applications in various fields of science and industry including biology and medicine. However, existing fluorescence lifetime imaging implementations are often based on confocal or scanning architectures, such as time correlated single photon counting in point scanning microscopes or stimulated emission depletion lifetime imaging, or on camera based gating schemes with limited temporal resolution. In many cases, this leads to insufficient imaging speed, restricted field of view, increased light dose or complicated instrumentation, which is problematic for dynamic live cell studies and for applications that require both super-resolved structural information and robust lifetime contrast.

It is therefore an objective of the present invention to provide an improved microscopy method and system that enable high resolution fluorescence microscopy with fluorescence lifetime contrast.

This task is solved by the subject matter of the independent claims. Embodiments are detailed in the dependent claims.

Thus, according to the invention a method for examining a sample enriched with at least one fluorophore, comprising the following steps:

exciting the sample with a plurality of different interference patterns, such that the sample emits in response to each interference pattern a respective fluorescence signal,
separating the respective fluorescence signal based on a degree of freedom of the respective fluorescence signal into a plurality of portions with different states of the degree of freedom,
modulating the states of the portions of each fluorescence signal within a predetermined time interval, such that each portion is detectable in the form of a modulated sub-portion and an unmodulated sub-portion,
detecting the modulated and unmodulated sub-portions of each portion in the form of a respective raw frame for each fluorescence signal, and

reconstructing an intensity image and a fluorescence lifetime value for each pixel of the intensity image comprising a plurality of pixels based on the raw frames.

For the purposes of this application, a fluorophore is understood to mean a substance or molecule that absorbs excitation light and then emits light of a different wavelength as fluorescence. In the context of the invention, a sample enriched with at least one fluorophore refers to any sample, for example, a biological specimen or material, that has been treated or labeled with one or more such fluorescent molecules so that it will produce an observable fluorescent signal under appropriate illumination.

According to the invention, it is provided that the sample is excited with a plurality of different interference patterns such that the sample emits, in response to each interference pattern, a respective fluorescence signal. Here and in the following, an interference pattern denotes a structured light intensity distribution created by the superposition of two or more coherent light beams, resulting in alternating regions of higher and lower illumination intensity. A fluorescence signal refers to an optical image given by the fluorescent light emitted from the sample's fluorophores. It is thereby the spatial distribution of fluorescence for a given excitation pattern. Advantageously, using multiple interference patterns to excite the sample encodes additional high-frequency spatial information into each fluorescence signal, making it possible to reconstruct a final intensity image with improved detail and resolution beyond the normal diffraction limit. This arrangement may capture different spatial frequency components of the sample by virtue of the varied illumination patterns, thereby increasing the achievable image resolution and allowing finer structural features of the sample to be discerned. It also improves the robustness of fluorescence lifetime determination, since multiple structured images provide redundant data that can be combined to reduce noise and computational errors in the lifetime calculations. As a result, the imaging system extracts more information from each set of exposures, potentially reducing the total number of measurements needed compared to conventional uniform illumination or point-by-point scanning methods while still enhancing image quality and detail.

It is provided that the respective fluorescence signal is separated based on a degree of freedom of the respective fluorescence signal into a plurality of portions with different states of the degree of freedom. A degree of freedom of the fluorescence signal is understood to mean an internal property of this fluorescence signal, such as polarization or wavelength. A portion denotes a part of the fluorescence signal that is associated with one specific state of the degree of freedom, such that the plurality of portions represents different channels of the same fluorescence signal which differ only by the state of the degree of freedom.

Furthermore, it is provided that the states of the portions of each fluorescence signal are modulated within a predetermined time interval such that each portion is detectable in the form of a modulated sub-portion and an unmodulated sub-portion. The predetermined time interval thereby refers to a defined time window following each excitation with the interference pattern, characterized by a gating start time after the excitation pulse and a gating duration that also determines the end of the interval. For each excitation with the interference pattern, the modulated state is changed in a respective predetermined time interval. As a result of this modulation, each separated portion of the fluorescence signal can be conceptually split into two further sub-portions. Thus, a sub-portion denotes that part of a portion which is distinguishable in the detection by the temporal modulation, wherein a modulated sub-portion is affected by the temporal change of the state within the predetermined time interval, while an unmodulated sub-portion remains unaffected by the modulation and represents a reference for the same portion. Therefore, the unmodulated sub-portion can be acquired outside this time interval or without modulation of its state. The modulated and unmodulated sub-portions can therefore be captured over a longer exposure period in the form of a common raw frame.

Advantageously, introducing a controlled modulation in this way imprints a time-varying signature on the fluorescence signal that can be exploited to extract additional information. In particular, the relative magnitude between the modulated and unmodulated sub-portions carries information about the fluorescence lifetime of the fluorophores. This arrangement thus encodes the lifetime data into the modulated intensity signal, enabling a determination of lifetime values.

It is provided that the modulated and unmodulated sub-portions of each portion are detected in the form of a respective raw frame for each fluorescence signal. Thus, for every fluorescence signal acquired under a given interference pattern, the method produces a raw frame comprising the modulated sub-portion and the unmodulated sub-portion of the plurality of portions of that fluorescence signal.

Furthermore, it is provided that, based on the raw frames, an intensity image is reconstructed, the intensity image comprising a plurality of pixels, and that a fluorescence lifetime value for each pixel of the intensity image is determined. An intensity image refers to a two-dimensional image representing the spatial distribution of fluorescence intensity across the sample, each pixel value corresponds to the brightness of fluorescence at that location. Fluorescence lifetime is used here to mean the characteristic time that a fluorophore remains in its excited state before emitting a photon and returning to the ground state. It is the average decay time of the fluorescence after excitation. Determining a fluorescence lifetime value for each pixel thus means calculating this decay time for the fluorescence originating from each individual pixel of the image, producing a corresponding lifetime map that can be co-registered with the intensity image. Advantageously, reconstructing both an intensity image and a per-pixel lifetime map provides a richly informative output from the measurement, as it combines the familiar spatial detail of a fluorescence intensity image with the additional quantitative dimension of lifetime information.

Fluorescence lifetime data can reveal molecular and environmental characteristics that intensity alone cannot discern. The fluorescence lifetime is independent of the local fluorophore concentration and less affected by variations in excitation intensity or detection efficiency, making the lifetime map a robust indicator of the microenvironment of each fluorophore. This means that the method can detect phenomena such as pH changes, ion concentration fluctuations, or molecular energy transfer events at each pixel, because such conditions influence the fluorophore's lifetime even if the emission intensity does not obviously change. Thus, by acquiring the intensity and lifetime information simultaneously for every pixel, the method enables advanced analyses like distinguishing different fluorescent species in the sample, even if their emission spectra overlap, they may have distinct lifetimes, and monitoring local environmental changes in real time, all within a single measurement. This comprehensive imaging approach not only enhances the informational content of the images but also improves the efficiency of experimental workflows. There is no need for separate intensity-only imaging and lifetime measurements, since the combined data is obtained in one go. As a result, the invention provides high-resolution fluorescence imaging combined with quantitative lifetime analysis in a time- and resource-efficient manner.

Using the method according to the invention it is also possible to obtain super resolved fluorescence lifetime imaging microscopy, FLIM, images with a lateral resolution on the order of about 140 nm instead of about 245 nm, so that individual structures such as closely spaced TetraSpeck and Fluospheres microspheres or individual Glial Fibrillary Acidic Protein, GFAP, fiber bundles, which are not resolved in a widefield FLIM image, become clearly separable in the super resolved FLIM image. At the same time fluorophores with overlapping emission spectra can be distinguished within a single spectral channel purely on the basis of their fluorescence lifetime, so that different markers and cellular compartments such as mitochondria and GFAP labeled structures can be separated even when their intensity images alone do not allow discrimination. The method also enables the recording of super resolved FLIM image sequences of live cells under photon limited conditions, so that dynamic processes such as vesicle motion, filopodia growth and retraction of cell regions can be followed over time while the fluorescence lifetime contrast remains robust against photobleaching that affects only the intensity. In addition, the spatially resolved lifetime information is sensitive to the microenvironment of the fluorophore, for example allowing changes in the localization and environment of MitoTracker Orange from mitochondria into cytoplasm and nucleus under stress conditions to be observed with super resolved spatial detail, so that morphological changes and environment dependent lifetime variations can be jointly evaluated in a single measurement approach.

According to an embodiment of the invention, it is intended that the sample is excited with a plurality of two-dimensional and/or three-dimensional interference patterns. A two-dimensional interference pattern is understood to mean an illumination pattern that varies laterally in the sample plane, for example as a sinusoidal modulation of intensity along one or more directions in the focal plane. A three-dimensional interference pattern is understood to mean an illumination pattern that varies both laterally and axially, so that the excitation intensity is structured in all three spatial directions and regions above and below the focal plane experience a different modulation than the in-focus region. Exciting the sample with a plurality of two dimensional and or three-dimensional interference patterns can provide flexible control over spatial resolution and optical sectioning. As a result it is possible to use two dimensional patterns for fast wide field super resolved imaging with comparatively simple alignment, while three dimensional patterns may suppress out of focus background and enhance axial contrast, which can improve the quality of the reconstructed intensity and fluorescence lifetime images and may permit more efficient use of the available photon budget and detector dynamic range.

According to an embodiment of the invention, it is intended that the sample is excited with the different interference patterns by excitation pulses, and that the steps of modulating the states of the portions and detecting the modulated and unmodulated sub-portions read as follows:

modulating the states of the portions of each fluorescence signal within a predetermined time interval as a function of the excitation pulses, such that each portion is detectable in the form of a modulated sub-portion and an unmodulated sub-portion, and
detecting the modulated and unmodulated sub-portions of each portion as a function of the excitation pulses in the form of a respective raw frame for each fluorescence signal.

An excitation pulse is understood to mean a short, intense burst of excitation light that causes the fluorophores in the sample to emit fluorescence. Thereby, the predetermined time interval refers to the defined time window following each excitation pulse, characterized by the gating start time after the excitation pulse and a gating duration that determines the end of the interval. By synchronizing the state modulation with the excitation pulses such that the predetermined time interval is defined as a function of the excitation pulses, each fluorescence signal is effectively decomposed into two time-gated sub-portions, namely a modulated and an unmodulated sub-portion, which correspond to different points in time separated by the predetermined time interval, while being recorded simultaneously in a single raw frame during an extended exposure of the detector. This arrangement may separate rapidly decaying fluorescence signal portions from more persistent background or long lived fluorescence by appropriate choice of the gating, so that an inherent fluorescence lifetime contrast can be obtained simultaneously with the structured illumination images. If the gating time is fixed at a defined delay after the excitation pulse, each pixel consistently samples the same section of the fluorescence decay, so that the intensity ratio between the modulated and unmodulated, that is gated and ungated, signal can be directly and reproducibly converted into a lifetime value. In this way background contributions are largely suppressed, and the evaluation can provide high resolution, electro-optic fluorescence lifetime imaging microscopy, FLIM, images. As a result, the lifetime related information in the form of intensity differences between modulated and unmodulated sub-portions is already present in the raw frames, which may lower the complexity of the lifetime analysis and improve the efficiency of data processing and the use of computing resources.

According to a further embodiment of the invention, it is intended that each fluorescence signal is integrated over a predetermined number of excitation pulses. Integrated over a predetermined number of excitation pulses means that rather than capturing the fluorescence signal from a single excitation pulse in isolation, the emissions resulting from a set number of sequential excitation pulses are accumulated to form one raw frame. By summing the fluorescence signal over multiple pulses, the intensity of each raw frame is increased, which advantageously improves the signal-to-noise ratio and the reliability of the image data. As a result, it can reduce the influence of random noise or fluctuations from individual pulses.

It is intended within the scope of a further embodiment of the invention that the step of reconstruction comprises the following further steps:

spatially overlapping the modulated sub-portions with the corresponding unmodulated sub-portions of a respective raw frame,
determining reconstruction parameters based on the spatially overlapped sub-portions, and
reconstructing an intensity image of the sample from the raw frames and the reconstruction parameters by means of a structured-illumination reconstruction routine comprising a Wiener filter.

Spatially overlapping the sub-portions means aligning each modulated sub-portion image with its corresponding unmodulated sub-portion image for the same raw frame such that they coincide in position, allowing identical features to overlap, which ensures that the sub-portions can be processed together consistently. From the aligned sub-portions, reconstruction parameters, for example values representing the fringe pattern phase shifts, orientations, and modulation contrast, are determined, and these parameters are then used in a structured-illumination reconstruction routine comprising a Wiener filter to compute a high-resolution intensity image, which is a reconstructed image showing the fluorescence intensity distribution with enhanced resolution. A Wiener filter is a linear filter, designed to optimally balance resolution enhancement and noise suppression, to combine the multiple raw frames and remove out-of-band noise. Advantageously, by overlapping the modulated and unmodulated images spatially, the same reconstruction parameters can be applied to both portions, which can simplify the reconstruction process and maintain a linear intensity response in the final image. As a result, it is possible to use a single set of parameters, such as performing a single Wiener filtering step, to handle both modulated and unmodulated content without introducing inconsistencies, which may improve computational efficiency and ensure that the reconstructed intensity values remain quantitatively reliable.

A configuration of the invention provides that the sub-portions are spatially overlapped, and the raw frames are summed with the spatially overlapped sub-portions, such that a wide-field image of the sample is generated. Here, a wide-field image of the sample refers to a conventional fluorescence signal that is obtained with uniform, non-structured illumination, showing the overall intensity distribution without resolution enhancement. In this configuration, after overlapping the corresponding modulated and unmodulated sub-portions of each raw frame, those images are added together to produce an image equivalent to a conventional fluorescence signal that would be obtained with uniform, non-structured illumination. Advantageously, this provides a direct wide-field reference image of the sample derived from the same raw frames, which can be used for validation or comparison with the high-resolution result. As a result, it is possible to immediately assess the overall sample structure in a familiar way and check for any reconstruction artifacts by comparing the super-resolved intensity image with the wide-field image, all without requiring an extra separate acquisition. Because the wide-field image is obtained simply by summing existing data, it does not demand significant additional computing power or storage, yet it may serve as a useful baseline for quantitative analysis.

A further configuration of the invention provides that the step of reconstruction comprises the following further steps:

spatially overlapping the sub-portions,
determining, for each pixel of the raw frames, an intensity ratio between modulated sub-portions and a sum of modulated sub-portions and unmodulated sub-portions, and
determining a fluorescence lifetime value for the respective pixel based on the intensity ratio.

In this context, the intensity ratio for each pixel refers to the fraction of the fluorescence signal coming from the modulated sub-portion relative to the total fluorescence signal, i.e. the sum of the modulated and unmodulated sub-portions, at that pixel. This ratio effectively encodes information about the fluorescence decay at that pixel. If the fluorophore's emission decays rapidly after each excitation pulse, a larger fraction of its emission will fall within the gated interval, whereas a longer-lived emission results in a smaller fraction gated. Using this intensity ratio, a fluorescence lifetime value is then derived, meaning the characteristic exponential decay time of the fluorescence at that pixel. Advantageously, calculating a lifetime value per pixel by means of the ratio allows simultaneous generation of a high-resolution intensity image and a corresponding lifetime map, without requiring complex time-resolved measurements for each pixel. As a result, it becomes possible to obtain both structural intensity information and functional lifetime information in parallel.

In the course of a further embodiment of the invention, it is intended that the fluorescence lifetime values are averaged for each pixel over all raw frames. This means that once a fluorescence lifetime value has been determined for a given pixel in each of the multiple raw frames, corresponding to all the different interference pattern phases and orientations, those values are combined - for example by calculating their arithmetic mean - to yield a final lifetime value for that pixel. Averaging over all raw frames advantageously improves the precision and reliability of the lifetime determination by reducing the influence of noise or minor systematic variations present in any single measurement. As a result, the lifetime map of the sample becomes more accurate and smooth, as random fluctuations are canceled out and any dependency of the lifetime values on a particular pattern orientation or phase is minimized, yielding a consistent representation of the fluorophore lifetimes across the entire image.

According to an embodiment of the invention, it is intended that the respective pixel is converted into a fluorescence lifetime value using a lookup table, wherein the lookup table is calculated from a position-dependent instrument response function of a modulator modulating the state and from an exponential decay model and assigns a fluorescence lifetime value to an intensity ratio. Here, a lookup table, or LUT, is understood to mean a precomputed data set or mapping that, for each possible intensity ratio value, directly provides a corresponding fluorescence lifetime value. This lookup table is generated by taking into account an instrument response function of the modulator, which denotes how the modulator and detection system respond over time at different positions in the field, and assuming an exponential decay model, meaning the fluorescence intensity decays exponentially with a certain characteristic lifetime after each excitation pulse. In practice, the lookup table encodes the relationship between the measured intensity ratio and the actual lifetime, thus correcting for any distortions or offsets introduced by the timing characteristics across the image. Advantageously, by converting each pixel's ratio to a lifetime through a precomputed lookup table, the lifetime image can be generated very rapidly and consistently, since the heavy computation of solving exponential decay equations is done in advance. As a result, it is possible to achieve near real-time determination of fluorescence lifetimes for the entire image, enhancing computing efficiency and ensuring that each lifetime value accounts for system-specific timing calibration, thereby improving accuracy.

According to a further embodiment of the invention, it is intended that the modulation is performed at a repetition rate in the kHz to MHz range, in particular at least 1 MHz, such that high-speed imaging with frame rates of several 10 frames per second are enabled. Operating at at least 1 MHz implies that the modulation is fast enough to synchronize with typical excitation pulse rates used in fluorescence microscopy without missing pulses or delaying the imaging process. Advantageously, such a high repetition rate for state modulation ensures that even if the excitation light source emits pulses very frequently, the modulator can keep up with the pulses, making it possible to gate every excitation event or to rapidly alternate the modulation state within each camera frame. As a result, the overall imaging speed can be increased and more data points or more refined time gates can be obtained in the same amount of time, which is beneficial for capturing fast dynamics in the sample and for efficient usage of the optical system's bandwidth.

It is intended within the scope of a further embodiment of the invention that the plurality of different interference patterns is formed by at least three, preferably five, interference patterns that are phase-shifted with respect to one another and/or at least two, preferably three, interference patterns of different orientation and/or periodicity and/or by combinations of the phase-shifted interference patterns with the interference patterns of different orientation and/or periodicity. In other words, the structured illumination is carried out using multiple distinct patterns: for example, a set of patterns that are identical in spatial frequency and orientation but shifted in phase relative to each other, and additionally patterns that are oriented differently. For instance, five phase shifts for each of three orientations may be used, resulting in a total of fifteen different raw frames being acquired. Phase-shifted interference patterns refers to moving the fringe pattern laterally in steps, for example by changing the relative phase between the interfering beams, so that each pattern illuminates the sample with a slightly shifted bright-dark stripe arrangement, and different orientations or perio-dicities mean that the direction of the stripes and/or their spacing is varied among the patterns. Advantageously, using multiple phase shifts and orientations ensures that the structured-illumination reconstruction has sufficient information to resolve fine details in all directions, thereby significantly improving the lateral resolution of the intensity image. As a result, it becomes possible to achieve a super-resolved image with a lateral resolution down to around 130-140 nm, that is substantially free of direction-specific artifacts and noise, because the combination of phases and orientations provides robust data for the reconstruction algorithm to suppress out-of-band frequencies and properly enhance in-band high-frequency information.

A configuration of the invention provides that, for the different orientations of the interference patterns, the polarization direction of the beam pairs is rotated such that an azimuthal polarization of the excitation results. In the context of the invention, azimuthal polarization of the excitation means that the polarization direction of the excitation light beam is adjusted depending on the pattern orientation. Effectively, as the interference pattern is rotated to a new orientation, the polarization of the two interfering beams is likewise rotated so that across all pattern orientations, the polarization directions cover a range of angles around the optical axis. This arrangement ensures that no matter how the pattern is oriented, the excitation light is not limited to a single polarization direction. Advantageously, by rotating the polarization direction in synchrony with pattern orientation, the excitation of fluorophores becomes more uniform with respect to molecular orientation and the interference fringe contrast remains consistently high for each pattern. As a result, it can mitigate polarization-dependent effects, such as cases where certain fluorophores emit less efficiently under one polarization direction, and thus may improve the quality and fidelity of the reconstructed image, providing equally strong resolution enhancement in all pattern directions.

In the course of a further embodiment of the invention the degree of freedom is a polarization of the fluorescence signal, and the fluorescence signal is separated into the plurality of portions of different polarization states. By separating the plurality of polarization portions, polarization-resolved information is obtained, providing insight into the orientation or anisotropy of the fluorescent molecules in the sample. This means the method accounts for any polarization-dependent effects in the fluorescence, making the subsequent analysis more comprehensive and robust. Furthermore, collecting the plurality of portions of different polarization states in parallel makes efficient use of the detector's bandwidth by gathering more information in the same acquisition period, thereby increasing the throughput of the imaging process without requiring additional measurement time. To modulate the polarization means to change the polarization state of the light in the predetermined time interval by switching it, for example with a modulator, between two states.

A further configuration of the invention provides that the polarization of plurality of portions of each fluorescence signal is modulated by a defined polarization angle, preferably by a defined polarization angle of 90°. A defined polarization angle refers to a specific fixed angle by which the polarization is rotated during modulation; preferably 90° is chosen, which corresponds to a quarter-turn rotation to an orthogonal orientation. **In** practice, modulating by 90° implies that when the modulator is activated, it rotates the polarization of the portions such that, for example, what was horizontally polarized becomes vertically polarized, and vice versa. Advantageously, using a known fixed rotation angle ensures that the difference between the modulated and unmodulated states is maximized and well-defined, simplifying the separation of sub-portions by the polarization optics. As a result, it is possible to achieve a very clear distinction between the modulated sub-portion and the unmodulated sub-portion for raw frame, which can improve the accuracy of the intensity ratio measurement and thus the reliability of the lifetime determination, while also reducing any cross-talk between polarization channels.

According to an embodiment of the invention it is intended, that the plurality of portions comprise a first portion and a second portion.

**In** the course of a further embodiment of the invention, it is intended that each fluorescence signal is separated into a first portion that is horizontally polarized and a second portion that is vertically polarized. By using a polarization beam splitter or a similar device as part of the modulator, the fluorescence emanating from the sample is split into two portions: one containing horizontally polarized photons and the other containing vertically polarized photons. As a result, the method can achieve higher signal efficiency and better image quality, since both polarization channels are utilized. Furthermore, separating the fluorescence into horizontal and vertical portions sets the stage for the subsequent polarization modulation to act on each portion, enabling the creation of modulated and unmodulated sub-portions in a controlled manner.

According to an embodiment of the invention, it is intended that the modulated and unmodulated sub-portions of the portions are detected spatially separated, preferably arranged in a quadrant pattern. That is, the modulator is configured so that it produces distinct images on the detector during capture of one raw frame. A quadrant pattern denotes that these four captured sub-images are laid out in the form of four quadrants of a rectangle, for instance side by side in a two-by-two arrangement. The quadrant arrangement on the detector also facilitates straightforward calibration for image alignment, because the relative positions of the sub-portions are fixed and known, allowing efficient overlapping or registration of the sub-portions after detection.

According to a further embodiment of the invention, it is intended that a start of the predetermined time interval is chosen such that the intensity ratio is 1:2, such that background dependencies are reduced. In other words, the gating, the onset of the modulated sub-portion capture, is timed after each excitation pulse so that the resulting intensity ratio for an average pixel is approximately 1:2. By selecting the start of the predetermined time interval to achieve this 1:2 ratio, the influence of any constant background light or autofluorescence is minimized, since such background would contribute equally to both the modulated and unmodulated sub-portions and thereby cancel out to a large extent in the ratio. Advantageously, arranging the timing in this way can significantly improve the accuracy of the lifetime calculation, as the ratio becomes less sensitive to bias from background illumination or detector offsets. As a result, it is possible to obtain more reliable and stable fluorescence lifetime values, especially in low-signal or high-background conditions, because the specific 1:2 ratio gating inherently compensates for background.

It is intended within the scope of a further embodiment of the invention that, for a static sample, two sets of raw frames are acquired at two different times of the predetermined time interval, in particular at a rising and a falling edge of a pulse signal of the modulator provided in the predetermined time interval, wherein each set comprises the different fluorescence signals. A static sample here means that the sample remains unchanged and motionless during the acquisition of both sets of images, so that any differences between the two sets can be attributed to timing rather than sample movement. The two different times in the predetermined interval could be, for example, an early gating time, around the rising edge of the modulator's drive pulse, which is the moment the modulator switches on, and a later gating time, around the falling edge of the pulse, when the modulator switches off. Thus, one set of structured illumination raw frames is captured looking at fluorescence predominantly at the beginning of the decay, and a second set is captured looking at a later portion of the fluorescence decay. Advantageously, by collecting two full structured illumination microscopy, SIM, image sets at two distinct gating positions, it becomes possible to extract more detailed temporal information about the fluorescence decay for each pixel. As a result, a more accurate or multi-faceted fluorescence lifetime analysis may be performed - for instance, the use of both rising-edge and falling-edge gated data can help distinguish fluorophores with different lifetimes or improve the confidence in the measured lifetime by confirming it across two time windows - all while still enabling the reconstruction of high-resolution intensity images from each set. This approach takes advantage of the static nature of the sample to gather twice the data without blurring or motion artifacts, thereby enriching the information content without compromising image quality.

A configuration of the invention provides that, for each excitation pulse, the pulse signal in the predetermined time interval is applied as a function of the excitation pulse in the form of a rectangular pulse to drive a modulator effecting the modulation of the state. This means that the modulator is driven by an electrical signal that is synchronized with each excitation pulse, where the electrical drive is a rectangular pulse - a signal that rises quickly to a certain voltage level, stays constant for the duration of the gate, and then falls quickly back to zero. The phrase applied as a function of the excitation pulse signifies that each time an excitation pulse is fired, a correspondingly timed rectangular gating pulse is generated to control the modulator within that same fluorescence decay cycle. Advantageously, using a well-defined rectangular gating pulse for every excitation pulse ensures that the state modulation is applied in a highly repeatable and precise manner for each fluorescence excitation event. As a result, each burst of fluorescence is gated identically, which can improve the consistency of the modulated and unmodulated sub-portion separation across all pulses. This precise synchronization eliminates timing jitter between excitation and gating, thereby enhancing the fidelity of the captured intensity ratios, since every gated interval starts and ends at the intended times given by the predetermined time interval, and ultimately contributing to more accurate lifetime measurements and a more stable reconstruction process.

The invention also refers to a microscopy system for examining a sample enriched with at least one fluorophore, comprising an illumination module configured to excite the sample with a plurality of different interference patterns, such that the sample emits in response to each interference pattern a respective fluorescence signal, a modulator configured to separate each fluorescence signal based on a degree of freedom of the respective fluorescence signal into a plurality of portions with different states of the degree of freedom, and to modulate the states of the portions of each fluorescence signal, a detector for detecting a respective raw frame for each fluorescence signal, and a control and evaluation unit configured to drive the modulator to perform modulation within a predetermined time interval, such that each portion is detectable in the form of a modulated sub-portion and an unmodulated sub-portion, and reconstruct, from the raw frames comprising the sub-portions, an intensity image having a plurality of pixels and a fluorescence lifetime value for each pixel of the intensity image.

In this context, a microscopy system denotes an integrated apparatus including optical portions and electronic controls designed for fluorescence microscopy of samples labeled with fluorophores. The illumination module is a part of the system that generates and projects the structured interference patterns of excitation light onto the sample. The modulator in the system serves to separate the emitted fluorescence signal by state, thereby creating the plurality of portions, and to impose the rapid state modulation that produces the modulated and unmodulated sub-portions of each portion. The detector is an area imaging device, such as a camera sensor, that captures each resulting raw frame, where each raw frame corresponds to one fluorescence signal under a specific structured illumination pattern and contains the separated sub-portions. The control and evaluation unit refers to the control electronics and processing computer that synchronize the timing of the illumination pulses and the modulator's operation, ensuring the modulation happens in the correct predetermined intervals relative to each excitation pulse, and that also carry out the reconstruction computations.

A further configuration of the invention provides that the illumination module comprises an interferometer, preferably an off-axis Michelson interferometer, wherein the interferometer is configured to split a laser beam into at least two coherent partial beams that are brought to interference in a sample plane of the sample so that the sample is excited with the interference pattern. In a Michelson interferometer configuration a beam splitter sends portions of the laser beam along two different arms with mirrors. The beams reflect back and recombine. Off-axis indicates that the two partial beams recombine at a slight angle to each other rather than perfectly collinearly, which results in an interference fringe pattern, a spatially varying intensity distribution, across the overlap region. The term partial beams refers to the two split portions of an initial beam, which remain mutually coherent. These partial beams meet at the sample plane, the region where the sample is located and in focus and form an interference pattern of bright and dark stripes that is used to excite the fluorophores in a structured manner. Advantageously, using an interferometer in the illumination module allows the creation of high-contrast, stable interference patterns on the sample without the need for complex diffractive optics or moving gratings. As a result, the system can produce well-defined structured illumination patterns that are necessary for enhancing resolution, and the off-axis Michelson design in particular provides flexibility in adjusting fringe spacing and orientation simply by altering beam angles, thereby facilitating the generation of multiple pattern configurations required by the SIM technique.

In the course of a further embodiment of the invention, it is intended that the interferometer comprises a scanning deflection mirror, in particular a two-axis galvanometric mirror, by which an angle between the partial beams can be changed so that an orientation and/or a periodicity of the interference pattern is adjustable. A scanner refers to a mirror arrangement that can be dynamically tilted or rotated to steer the path of a beam by the control and evaluation unit. A two-axis galvanometric scanner is a specific type of scanner that can pivot around two perpendicular axes using galvanometer-driven motors, allowing precise and rapid angular adjustments in both horizontal and vertical directions. In the interferometer, such a mirror can be used to change the relative angle between the two partial beams: tilting the mirror alters the direction of one beam before recombination, which in turn changes the interference pattern's fringe orientation and spacing and thereby periodicity. By controlling this mirror, the system can electronically adjust the pattern, rotating it to different angles or modifying the fringe spacing, without manual intervention. Advantageously, this means that the required set of structured illumination patterns can be generated swiftly by simply driving the galvanometric mirror to the appropriate angles for each pattern. As a result, pattern switching can be achieved in a fraction of a second or even faster, which is highly beneficial for fast imaging and for minimizing any delay between acquiring the various raw frames. This electronic adjustability also contributes to precise repeatability and alignment of the patterns, improving the reliability of the reconstruction and reducing computational correction needed for any pattern misalignment.

According to an embodiment of the invention, it is intended that the interferometer comprises an optical phase modulator, in particular a glass plate adjustable by a voice-coil drive, in one arm of the interferometer, wherein a phase of the interference pattern is adjustable with the phase modulator. An optical phase modulator in one arm of the interferometer is a device that can finely alter the optical path length of that arm, thereby shifting the phase of the partial beam in that arm relative to the other. One implementation is a glass plate mounted on a mechanism; by moving the glass plate in or out of the beam path, thus changing the optical path length through glass, the phase difference between the two interferometer arms can be tuned by the control and evaluation unit. A voice-coil drive is a type of actuator, similar to a loudspeaker coil, that can produce smooth, precise linear motion when current is applied. When attached to the glass plate, the voice-coil drive can rapidly and accurately adjust the plate's position, thus fine-tuning the phase difference between the beams. Adjusting the phase of the interference pattern effectively means sliding the interference fringes across the sample, for example, shifting from a bright fringe to a dark fringe at a given location. Advantageously, incorporating a phase modulator allows the system to acquire multiple phase-shifted images for each pattern orientation automatically. The control and evaluation unit can increment the phase modulator to several discrete settings, for example corresponding to phase shifts of 0°, 90°, 180°, etc., and capture an image at each setting. As a result, the phase of the interference pattern is adjustable in a rapid and controlled manner, enabling the capture of the necessary phase-shifted images essential for SIM reconstruction, without needing to physically move the sample or the entire optical setup. This contributes to faster image acquisition and improved stability of phase stepping, which directly translates into more accurate image reconstruction and efficient use of computational algorithms, since the phase steps are exact and repeatable.

According to a further embodiment of the invention, it is intended that the illumination system comprises a pulsed light source to excite the sample with excitation pulses. A pulsed light source means that the illumination used for exciting the fluorophores emits light in short, discrete pulses rather than a continuous beam. Common examples are pulsed lasers or modulated LEDs that produce flashes of excitation light at a certain repetition rate. By providing excitation in pulses, each fluorescence emission event in the sample starts at a known time and then decays, which is a prerequisite for time-gated detection techniques. Advantageously, the use of a pulsed light source allows the method and system to measure fluorescence lifetimes by defining a clear start point for each fluorescence decay with each pulse. The modulator and detector can then be synchronized to these pulses. As a result, the sample can be excited periodically and the emission can be sampled in specific time windows after each pulse, making it possible to discriminate early versus late photons, which underpins the lifetime contrast. Moreover, pulsed excitation often enables higher peak intensities without increasing average power, which can improve the interference pattern contrast while mitigating photobleaching and phototoxicity due to lower duty cycle, thereby optimizing both the performance and safety of the imaging process.

It is intended within the scope of a further embodiment of the invention that the illumination module comprises a half-wave plate, A/2 plate, configured to provide, for the different orientations of the interference patterns, an azimuthal polarization of the excitation radiation. By adjusting the half-wave plate, the polarization can be rotated to any desired angle. In this system, the half-wave plate is used such that when the interference pattern's orientation is changed, the polarization of the excitation beams can be rotated accordingly to maintain an azimuthal polarization scheme for the excitation as described above. The half-wave plate is thus configured to introduce the appropriate polarization rotation for each pattern orientation. Advantageously, this means the excitation light's polarization can always be optimally set for each structured pattern, ensuring that both beams forming the interference pattern have the proper polarization state to produce uniform illumination and interact consistently with the sample's fluorophores. As a result, the excitation can achieve an effectively isotropic effect despite pattern rotation - in other words, the combination of changing the pattern orientation and synchronously rotating the polarization via the half-wave plate maintains high fringe contrast and uniform fluorescence excitation across all pattern directions, which contributes to even resolution enhancement and intensity distribution in the reconstructed image.

A configuration of the invention provides that the modulator comprises a first polarization splitting system configured to split each fluorescence signal into the plurality of portions with different polarization states and/or comprises a second polarization splitting system configured to project the modulated sub-portions and the unmodulated sub-portions, in the form of the raw frame, spatially separated onto an image plane of the detector. A polarization splitting system, PSS, is an optical component that divides incoming light into the plurality of beams based on polarization-commonly, it transmits one linear polarization, horizontal, while reflecting the orthogonal polarization, vertical.

In the case of two portions, the first polarization splitting system intercepts the fluorescence signal coming from the sample and separates it into two paths, the first portion, horizontal, and the second portion, vertical. After this splitting and after the polarization modulation is applied to these two portions, the second polarization splitting system is arranged to take the now time-modulated beams and direct the modulated and unmodulated parts to different locations on the detector's image plane, the surface of the camera sensor. In practice, the second PSS may be oriented at 45° to the original polarization basis, so that it splits each incoming beam, which now contains a mix of polarization states because of the modulator's action, into two directions. One carrying the modulated sub-portion and the other carrying the unmodulated sub-portion, thereby forming the four separate sub-portions on the detector. Advantageously, the use of two polarization splitting systems in this configuration ensures that both polarization portions of fluorescence are utilized and that the subsequent modulation-induced polarization changes are converted into spatial separation on the detector.

In the course of a further embodiment of the invention, it is intended that a quarter-wave plate, $\lambda/4$ plate, is arranged in the beam direction upstream of the first polarization splitting system to mix the polarization. Placing a quarter-wave plate before the first PSS in the path of the fluorescence emission means that the emitted light from the sample, which might have some polarization bias or spatially varying polarization, is transformed into a state where polarization portions are more uniformly distributed, for example, converting any linear polarization coming from the sample into circular polarization. To "mix the polarization" implies that after passing through the quarter-wave plate, the fluorescence light doesn't predominantly favor one linear polarization state - instead, each photon's polarization is effectively a mix of what would become horizontal and vertical portions when it reaches the PSS. Advantageously, this leads to a more symmetric and uniform point spread function in the imaging system because any polarization-dependent focusing differences are evened out, and both the first and second portions, horizontal and vertical polarization paths, receive a comparable share of the light from any given feature in the sample. As a result, image artifacts or resolution anisotropy that could arise from the microscope favoring one polarization, especially in high-NA systems where polarization can affect focal spot shape, are reduced. This improvement in the point spread function translates to clearer, more accurate images and ultimately contributes to better reconstruction quality in the structured illumination process, since each raw frame carries a more faithful representation of the sample's fluorescence regardless of polarization.

According to an embodiment of the invention, it is intended that the modulator comprises a first polarization splitting system, a second polarization splitting system, and an electro-optic polarization modulator, wherein the electro-optic polarization modulator, preferably a Pockels cell, is arranged optically between the first polarization splitting system and the second polarization splitting system, the first polarization splitting system separates each fluorescence signal into the plurality of portions of different polarization states, the electro-optic polarization modulator modulates the polarization of the plurality of polarizations in the predetermined time intervals, and the second polarization splitting system projects the sub-portions, in the form of the raw frame, spatially separated onto an image plane of the detector. An electro-optic polarization modulator is a device that can change the polarization state of light in response to an applied electric voltage, exploiting the electro-optic effect. The preferred Pockels cell comprises an electro-optic crystal that rotates the polarization of passing light when driven by a high-voltage pulse. In this embodiment, after the first PSS has split the incoming fluorescence in the plurality of portions, these portions pass through the electro-optic polarization modulator. During the predetermined time intervals, the gating windows synchronized with the excitation pulses, the electro-optic polarization modulator is activated such that it rapidly switches the polarization states of these portions.

According to a further embodiment of the invention, it is intended that the modulator comprises, in the beam direction of the plurality of portions in the modulator, a Pockels cell, preferably a Pockels cell configured in a transverse arrangement in the beam direction, the Pockels cell being configured to modulate the polarization of the plurality of portions within the predetermined time interval. In this context, a Pockels cell configured in a transverse arrangement means that the orientation of the electro-optic crystal and its electrodes is such that the electric field applied is perpendicular to the path of the light beam passing through the crystal. This transverse design often allows the Pockels cell to have a larger clear aperture for the beam to pass through, since electrodes can be placed on the sides of the crystal rather than directly in the beam path. The Pockels cell thus can accommodate the portions of the fluorescence signal and modulate their polarization state during the chosen gating interval. Advantageously, utilizing a Pockels cell in a transverse configuration ensures that even light rays at wider angles, that emanate from high numerical aperture, can traverse the crystal without significant clipping or distortion, because the aperture and angular acceptance of the modulator are large. As a result, the full fluorescent image can be effectively modulated, which means the high-resolution information carried by high-angle fluorescent rays of the fluorescent image is preserved. Moreover, a transverse Pockels cell typically requires a higher voltage for the same polarization rotation compared to a longitudinal one, but it provides the benefit of supporting the wide-field of view and high-NA beams essential for imaging an extended area of the sample without sacrificing intensity or resolution.

It is intended within the scope of a further embodiment of the invention that the Pockels cell has an angular acceptance of at least 60 mrad, preferably 80 mrad, and an etendue of at least 1 mm$^2$·sr. Angular acceptance describes the range of incident light angles that the Pockels cell can effectively transmit and modulate light. These specifications are chosen to match or exceed the optical throughput of a high-NA microscope objective lens. Advantageously, a Pockels cell meeting these criteria can accommodate the entire light cone from an objective lens with NA on the order of 1.3 or higher, which typically has a very large angular spread. As a result, essentially none of the fluorescence light that is collected by the objective lens is cut off by the modulator. This ensures that the structured illumination and time-gating technique does not compromise the inherent resolution or brightness of the system, thereby maintaining optimal image quality and enabling the high-resolution output image to fully benefit from the wide aperture of the optical system.

A configuration of the invention provides that the Pockels cell is formed with an electro-optic crystal comprising lithium tantalate. Lithium tantalate, $LiTaO_3$, is a specific electro-optic crystal material known for its strong Pockels effect and favorable properties for high-speed modulation. By constructing the Pockels cell using lithium tantalate, the modulator benefits from this material's characteristics, including low electrical conductivity and low piezoelectric ringing at high frequencies. Advantageously, lithium tantalate can be driven with rapid voltage pulses while exhibiting minimal internal heating and mechanical vibration, which means the Pockels cell can operate reliably at the multi-megahertz repetition rates required by up to about 5 MHz for short bursts, and around 1 MHz continuously over extended periods, as evidenced by lithium tantalate's low radio-frequency power dissipation. As a result, the Pockels cell can switch polarization states extremely fast, with measured rise and fall times on the order of a few nanoseconds, and with high stability, ringing or transient oscillations in the crystal are very low, on the order of 1% of the signal. These material advantages translate directly into precise and repeatable modulation of the fluorescence signal, which improves the clarity of the separation between modulated and unmodulated sub-portions and thereby enhances the accuracy of both the reconstructed intensity image and the lifetime determination.

A further configuration of the invention provides that the Pockels cell comprises a first lithium tantalate crystal and a second lithium tantalate crystal arranged sequentially in the beam direction, wherein the first lithium tantalate crystal and the second lithium tantalate crystal are arranged in the Pockels cell with a predetermined orientation aligned relative to one another. Thus, these two crystals are oriented with respect to each other, for instance, their crystal axes might be rotated 90° relative to each other, or some other angle that yields complementary effects. This arrangement can be termed a "paired crystal" or "compensated" Pockels cell. The predetermined relative orientation is selected such that any unwanted phase shifts along the optical axis caused by the crystals' natural birefringence or by uniform heating, thermal effects, in one crystal are counteracted by the other crystal. In essence, one crystal's imperfections or slow drifts are nullified by the other, while the phase shifts caused by the electro-optic effect add together from both crystals. Advantageously, this matched pair configuration greatly stabilizes the behavior of the Pockels cell. Natural birefringence, which could depolarize light or shift phase even with no voltage applied, and temperature-induced refractive index changes are largely canceled out, meaning the device has very little effect on the polarization when it's not actively driven, and it remains stable even as conditions like temperature change. Meanwhile, when a drive voltage is applied, the electro-optic rotation from each crystal adds together, effectively doubling the modulation effect for the same applied voltage. As a result, the Pockels cell achieves a strong polarization modulation with improved efficiency, e.g. lower voltage or shorter pulses needed for the same rotation, and with very high fidelity, because the off-state and baseline remain consistent and any mechanical ringing is minimized by the opposed orientation. This leads to clean gating of the fluorescence signal. The transition between unmodulated and modulated sub-portions is sharp and without spurious phase delays, which is crucial for accurate time-resolved imaging. Ultimately, the use of two aligned lithium tantalate crystals contributes to the system's ability to reach high modulation frequencies and stability necessary for obtaining super-resolved images with reliable lifetime information, without distortion from the modulator itself.

A further configuration of the invention provides that the detector is designed as an area electronic image detector, in particular as an sCMOS camera. An area electronic image detector means a sensor that can capture two-dimensional images and refers to devices like CCD or CMOS camera sensors that have a matrix of pixels. An sCMOS camera, scientific CMOS, is a specific type of high-performance camera that offers low noise, high dynamic range, fast frame rates, and high resolution, making it very suitable for scientific imaging. By using an area detector such as an sCMOS, the system can record the entire field of view of the sample at once, including the quadrant-separated sub-images. Advantageously, an sCMOS camera can read out multiple regions of interest quickly and with low noise, which matches well with the quadrant pattern of four sub-images - it can effectively treat them as four regions and still achieve fast exposure and readout times. As a result, the system is able to capture all required raw frames with the needed temporal resolution, while maintaining high image quality. The area detector also means the structured illumination pattern is imaged over the whole sample simultaneously, allowing the reconstruction algorithm to utilize the full frame information. In sum, this detector choice supports the combination of high spatial resolution and time-resolved detection by providing the necessary sensitivity and speed in a two-dimensional format, thereby ensuring that neither detail nor timing information is lost during acquisition.

In the course of a further embodiment of the invention, it is intended that the control and evaluation unit is configured to time-control the illumination module and the modulator such that the excitation pulses and the actuation of the modulator are at a predetermined time offset. This means the control system is programmed to introduce a deliberate fixed delay between the timing of the laser's excitation pulses and the timing of the modulator's gating action. A predetermined time offset could be, for example, a few nanoseconds delay after each laser pulse before the modulator opens or closes, chosen based on the desired part of the fluorescence decay to capture. By having this capability, the unit can ensure that the modulator's on/off gating is neither exactly simultaneous with the pulse, which might capture excitation scatter or very prompt fluorescence, nor too delayed, which might miss the early fluorescence, but rather starts and stops at precisely the intended moments relative to the pulse, giving the predetermined time interval. Advantageously, this precise timing control allows optimization of the intensity ratio and other parameters for lifetime measurement - for instance, setting the offset such that the gating starts after the directly excited singlet-state fluorescence is mostly emitted can improve contrast, or aligning it to achieve the aforementioned 1:2 ratio. As a result, the synchronization eliminates timing mismatches and ensures that every raw frame is acquired under identical timing conditions relative to the excitation. This not only yields more accurate and reproducible lifetime calculations, since each pixel's modulated/unmodulated balance is set by the same timing rules, but it also means the system can adapt to different fluorophore lifetimes or experimental conditions by simply reprogramming the offset, thus providing flexibility and efficient use of the apparatus for various samples without hardware changes.

According to a further embodiment of the invention, it is intended that the microscopy system comprises an objective lens with a numerical aperture of at least 1.3, the objective lens being optically connected to the modulator, and the control and evaluation unit is configured to generate an intensity image with a lateral resolution of at most 150 nm, in particular from 130 nm to 140 nm. A microscope objective lens with a numerical aperture, NA, of at least 1.3 is a very high-performance lens, often an oil-immersion objective lens, capable of capturing fluorescence light at steep angles from the sample, which is essential for high-resolution imaging. Lateral resolution refers to the smallest distance between two points in the sample plane that can be distinguished separately in the image; a value of 130-140 nm is substantially below the typical diffraction limit, ~200 nm for visible light, indicating super-resolution capability. The configuration wherein the control and evaluation unit processes the raw frames to produce an intensity image at or below 150 nm resolution means that the structured illumination method, combined with the high-NA objective lens, successfully doubles the effective resolution. Advantageously, using such a high-NA objective lens maximizes the resolving power and photon collection of the microscope, and the structured illumination reconstruction by the control and evaluation unit capitalizes on that to push the image detail beyond the normal diffraction barrier. As a result, the system can reliably produce images resolving features on the order of one-tenth of a micron. This enables the observation of sub-cellular structures or any fine details in the sample with much greater clarity than conventional microscopy. Achieving this resolution does not require point-by-point scanning or single molecules as in some other super-resolution methods, but rather is done in wide-field, which allows for faster imaging of larger areas. The combination of lifetime mapping with such high spatial resolution is particularly powerful, as it provides detailed structural information together with local fluorescence dynamics, all at a scale previously not accessible with standard optical microscopy.

The invention is explained in more detail below with reference to the accompanying drawings and examples of embodiments. However, it should be noted that the embodiments are not intended to limit the invention but merely represent examples of its implementation. The features shown may be implemented individually or in combination with other features of the description or the patent claims, either individually or in combination.

In the drawings:

Fig. 1    schematically depicts a microscopy system according to an embodiment of the invention, and

Fig. 2    depicts a flow chart of a method according to an embodiment of the invention.

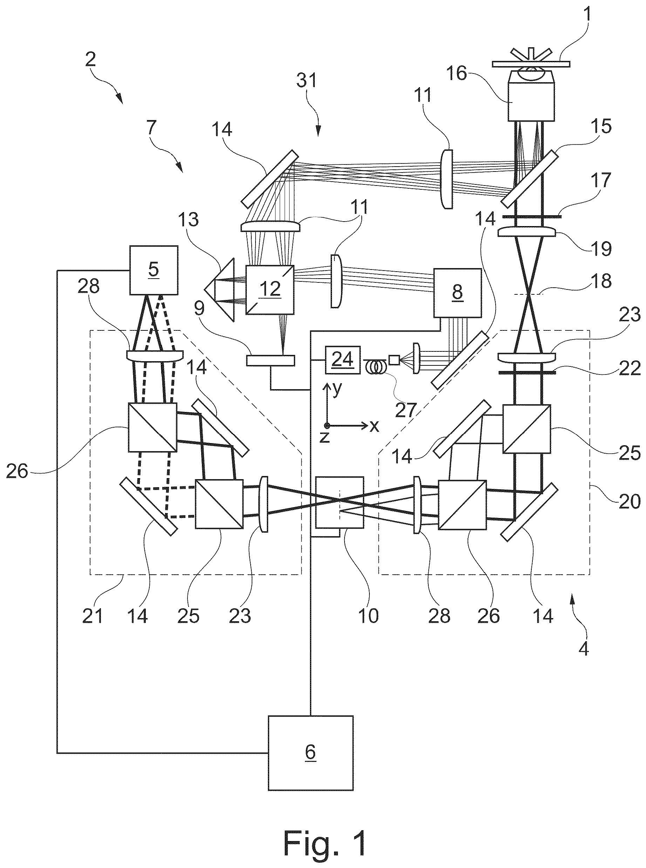

A microscopy system 2 for examining a sample 1 enriched with at least one fluorophore comprises an illumination module, a modulator, a detector and a control and evaluation unit as schematically depicted in Fig. 1. The illumination module includes a beam source 24 that emits a pulsed laser beam with a wavelength of 532 nm and a pulse duration of about 100 ps. The laser beam is coupled into the optical setup by a fiber 27, is collimated and then reflected onto a scanner 8 that is designed as a two axis galvanometric scanner. The deflected beam is focused by an achromatic lens 11 with a focal length of 100 mm into a modified off axis Michelson interferometer 7. In the interferometer, the focused beam is split into two coherent partial beams by a 50/50 beam splitter 12. In a transmitted path the partial beam is reflected back by a hollow retro reflector 13, while in a reflected path the partial beam is reflected by a phase modulator 9 that comprises a flat reflective mirror and a glass plate mounted on a voice coil drive between the reflective mirror and the beam splitter 12. After reflection in the two arms, the partial beams are recombined at the beam splitter 12 and the resulting beam pair is collimated again by a second achromatic lens 11. The lateral offset of the two beams forming the beam pair as well as the azimuthal orientation of the beam pair is controlled by the deflection angle of the scanner 8, with a switching time between different deflection angles on the order of 500 $\mu$s. For the three illumination pattern orientations needed for structured illumination microscopy, the scanner 8 selects the corresponding deflection angles, while the phase of the interference pattern is shifted by changing the optical path length in one interferometer arm with the phase modulator 9. The beam pair is then projected by a further achromatic lens 11 and a polarization maintaining dichroic filter 15 into the back focal plane of an objective lens 16, which is a 60x magnification objective lens with numerical aperture, NA, 1,5. In a sample plane of the sample 1 the two partial beams interfere and generate different two-dimensional sinusoidal interference patterns, forming a structured illumination microscope, SIM, with a field of view of about 55 $\mu$m in diameter.

In the electro-optic fluorescence lifetime imaging, EO-FLIM, portion of the microscope, the fluorescence signal emitted by the sample 1 in response to the structured excitation with the different interference patterns is collected by the same objective lens 16, transmitted through the dichroic filter 15 and an emission filter 17 and focused by a tube lens 19 into an image plane 18. In this image plane, a first polarization splitting system 20 is arranged that contains a first relay lens 23 and a second relay lens 28, a first polarization beam splitter 25, a second polarization beam splitter 26 and two mirrors 14 between the first and second polarization beam splitter 25, 26. Following the tube lens 19, the first relay lens 23 images the fluorescence signal towards the first polarization beam splitter 25. Between the first relay lens 23 and the first polarization beam splitter 25, a quarter wave plate 22 is placed in the beam path. The quarter wave plate 22 mixes the polarization of the fluorescence emission such that polarization portions are more uniformly distributed and thus the subsequent splitting into different polarization portions is more balanced, which improves the point spread function of the imaging. The first polarization splitting system 20 then separates each fluorescence signal into a first portion and a second portion of different polarization. In this case a first portion with horizontal polarization and a second portion with vertical polarization. The first and second portion are reflected at the two mirrors 14 and guided into the second polarization beam splitter 26 of the first polarization splitting system 20. The second polarization beam splitter 26 is arranged such that the first portion and the second portion leave the first polarization splitting system 20 in the same propagation direction but laterally displaced and thus spatially separated. The second relay lens 28 collimates the two laterally displaced portions and projects them into a Pockels cell 10 of the modulator 4, such that two images corresponding to the first and second portion are formed inside the Pockels cell 10.

The Pockels cell 10 is configured as an electro-optic polarization modulator in a transverse arrangement. It comprises a first lithium tantalate crystal and a second lithium tantalate crystal arranged sequentially in the beam direction, with a predetermined orientation of their crystal axes relative to one another such that natural birefringence and thermal effects that would induce unwanted phase shifts along the optical axis are at least partially compensated while phase shifts due to the electro-optic effect add. The transverse configuration means that the electric field is applied across the side faces of the crystals, perpendicular to the optical beam direction, which allows a large clear aperture and high angular acceptance compatible with high NA imaging. The Pockels cell 10 is driven by high voltage rectangular pulses from the control and evaluation unit 6 with a repetition rate in the megahertz range, in particular at least 1 MHz. For each excitation pulse, a rectangular voltage pulse is applied as a function of the excitation pulse, defining a predetermined time interval during which the polarization of the first portion and the second portion passing through the Pockels cell 10 is rotated by a defined polarization angle of 90°, while outside this time interval the polarization is not changed. The onset of the rectangular voltage pulse defines a gating time with respect to each excitation pulse, and the pulse duration defines the gating duration, so that the predetermined time interval is characterized by a start time and an end time relative to the excitation pulse. The value of the voltage applied to the Pockels cell 10 to achieve a 90° rotation of polarization scales essentially linearly with the fluorescence wavelength by 3.5V/nm * $\lambda$ and is chosen such that full modulation is achieved for the emission band of interest. The Pockels cell 10 exhibits rise and fall times of the gate of about four nanoseconds and low ringing on the order of one percent at full modulation. The angular acceptance of the Pockels cell 10 is about 80 mrad, defined as the incident angle at which the switching efficiency drops to about 95%, and together with a transverse crystal width of about 9 mm this provides an etendue of G = 1.3 mm$^2$Sr, which is sufficient to accommodate the phase space volume associated with a high numerical aperture objective lens and the given field of view without clipping the fluorescence signal.

Downstream of the Pockels cell 10, a second polarization splitting system 21 is arranged that is optically mirror inverted with respect to the first polarization splitting system 20 but does not comprise a quarter wave plate. The second polarization splitting system 21 contains a first and second polarization beam splitter 25, 26 and a first and second relay lens 23, 28 arranged such that the modulated and unmodulated sub-portions of the first portion and the second portion emerging from the Pockels cell 10 are converted into four spatially separated sub-portions that are projected onto different areas of the image plane of a detector 5. In particular, the second polarization splitting system 21 is oriented such that it splits the polarization states corresponding to the modulated and unmodulated contributions into separate paths, so that in the image plane of the detector 5 four sub images are formed in a quadrant pattern, corresponding to a modulated sub-portion and an unmodulated sub-portion of the first portion as well as a modulated sub-portion and an unmodulated sub-portion of the second portion. The detector 5 is designed as an area electronic image detector in the form of a sCMOS camera, that integrates the incoming fluorescence signal over an exposure time comprising multiple excitation pulses. Each exposure of the detector 5 provides a raw frame in which the four quadrant sub images representing the modulated and unmodulated sub-portions of the first and second portion of the fluorescence signal are recorded simultaneously. The control and evaluation unit 6 is connected to the illumination module 3, the modulator 4 and the detector 5 and is configured to synchronize the excitation pulses from the beam source 24, the gating pulses applied to the Pockels cell 10 and the acquisition of raw frames by the detector 5 with a predetermined time offset, in order to perform a method for examining the sample enriched with at least one fluorophore as described below.

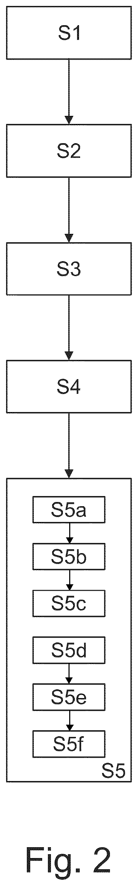

In operation, the method according to Fig. 2 is carried under control of the control and evaluation unit 6.

In a first step S1, the sample enriched with at least one fluorophore is excited with a plurality of different interference patterns such that the sample emits in response to each interference pattern a respective fluorescence signal. To this end, the control and evaluation unit 6 drives the scanner 8 and the phase modulator 9 of the interferometer 7 so that a set of structured illumination patterns, the different interference patterns, is generated in the sample plane. The plurality of different interference patterns comprises fifteen interference patterns obtained from five phase shifts introduced by the phase modulator and three different orientations defined by three deflection angles of the scanner.

Thus, fifteen different interference patterns are used, obtained by combining three different pattern orientations with five different phase shifts per orientation. For each interference pattern, the pulsed beam source 24 provides excitation pulses that are synchronized with the gating pulses of the Pockels cell 10 and the exposure time of the detector 5. The interference patterns encode high spatial frequency information of the sample into the fluorescence signals, which later allows the reconstruction of super resolved intensity images.

In a second step S2, for each fluorescence signal emitted in response to a given interference pattern, the respective fluorescence signal is separated based on a degree of freedom of the respective fluorescence signal into a plurality of portions with different states of the degree of freedom. Herein the fluorescence signal is seperated into a first portion and a second portion of different polarization. Each fluorescence signal is separated in the first polarization splitting system 20 into a first portion that is horizontally polarized and a second portion that is vertically polarized. The quarter wave plate 22 upstream of the first polarization splitting system 20 ensures that the fluorescence polarization state entering the splitting optics is well conditioned so that both the first and second portion carry comparable information content and the point spread function in both channels is well matched. The first polarization splitting system 20 thereby produces two laterally displaced images in the Pockels cell 10 corresponding to the first portion and the second portion of the fluorescence signal.

In a third step S3, the states of the portions of each fluorescence signal are modulated within a predetermined time interval. Thus, the polarization of the first portion and the second portion of the respective fluorescence signal is modulated within the predetermined time interval for the defined polarization angle of 90°, such that the first portion and the second portion are each detectable in the form of the modulated sub-portion and the unmodulated sub-portion. The control and evaluation unit 6 generates rectangular high voltage pulses that are applied to the Pockels cell 10 as a function of each excitation pulse. For each excitation pulse, the onset of the rectangular pulse defines the gating time relative to the excitation pulse, and the pulse duration defines the gating duration, together specifying the predetermined time interval during which the Pockels cell 10 rotates the polarization of the first portion and the second portion by 90°. Outside this predetermined time interval, the polarization remains unrotated. By choosing the predetermined time interval as a function of the excitation pulses, each fluorescence signal is effectively decomposed into two time gated components, namely the modulated sub-portion corresponding to fluorescence photons passing through the Pockels cell 10 while the voltage is applied, and the unmodulated sub-portion corresponding to photons passing through the Pockels cell 10 while no voltage is applied. The repetition rate of this modulation is set in the megahertz range, in particular at 5 MHz, so that each excitation pulse is associated with a corresponding gating event. The control and evaluation unit 6 can choose the start of the predetermined time interval such that, for a representative region of the image, an average intensity ratio between the modulated and the total signal is approximately 1:2, which reduces background dependencies and maximizes information content for lifetime determination.

In a fourth step S4, the sub-portions are detected as a function of the excitation pulses in the form of a respective raw frame for each fluorescence signal. The detector 5 integrates the modulated and unmodulated sub-portions of the first portion and the second portion over a defined exposure time that spans multiple excitation and predetermined time interval cycles, thereby forming four quadrant images in a single raw frame corresponding to the modulated sub-portion of the first portion, the unmodulated sub-portion of the first portion, the modulated sub-portion of the second portion and the unmodulated sub-portion of the second portion.

Once a raw frame has been acquired for a given interference pattern, the control and evaluation unit 6 changes the phase of the interference pattern, and when all phase steps for a given orientation are completed, the orientation is changed by adjusting the scanner 8. In this manner, a set of raw frames is acquired that comprises one raw frame for each of the plurality of different interference patterns, fifteen raw frames for three orientations and five phase shifts per orientation.

For static samples, the same sequence of fifteen raw frames may be acquired at two different gating times within the predetermined time interval, for instance at a gating time corresponding to the rising edge and at a gating time corresponding to the falling edge of the rectangular voltage pulse applied to the Pockels cell 10, in order to obtain additional temporal information about the fluorescence decay.

In a fifth step S5, an intensity image and a fluorescence lifetime value for each pixel of an intensity image comprising a plurality of pixels are reconstructed based on the raw frames.

To reconstruct a super resolved intensity image, in a sub step S5a the modulated sub-portions are spatially overlapped with the corresponding unmodulated sub-portions of a respective raw frame. For each quadrant image, the control and evaluation unit 6 determines the relative shifts and possible small geometric distortions between the quadrants by a parametric alignment procedure so that the modulated and unmodulated sub-portions corresponding to the same field of view are co registered with sub pixel accuracy.

In a sub step S5b, reconstruction parameters such as effective pattern phases, modulation depths and orientations are determined based on the spatially overlapped sub-portions.

In a sub step S5c, an intensity image of the sample is reconstructed from the raw frames and the reconstruction parameters by means of a structured illumination reconstruction routine comprising a Wiener filter. A standard structured illumination reconstruction algorithm, adapted to the presence of four polarization and gating channels, is employed in which the Fourier components of the raw frames at the different pattern frequencies and orientations are combined and filtered in the frequency domain by a Wiener filter to yield a super resolved intensity image. In parallel, a wide field intensity image can be obtained by summing the raw frames over all interference patterns and sub-portions, which provides a diffraction limited reference image.

For fluorescence lifetime reconstruction, in a sub step S5d the sub-portions are spatially overlapped for each pixel position so that corresponding pixels of the modulated and unmodulated sub-portions of the first and second portion are aligned. In a sub step S5e, an intensity ratio r is calculated for each pixel of the raw frames between the modulated sub-portions and the sum of modulated and unmodulated sub-portion. The four quadrant signals are denoted $I_{HV}$, $I_{VH}$, $I_{HH}$ and $I_{VV}$, where $I_{HV}$ is a modulated sub-portion of the first portion, $I_{VH}$ is a modulated sub-portion of the second portion,

$I_{HH}$ is an unmodulated sub-portion of the first portion and $I_{VV}$ is an unmodulated sub-portion of the second portion. For each pixel, the ratio r is defined as:

$$r = \frac{I_{modulated}}{I_{modulated} + I_{unmodulated}} = \frac{I_{HV} + I_{VH}}{I_{VH} + I_{HV} + I_{HH} + I_{VV}}$$

This ratio encodes information about the fraction of fluorescence photons that arrive during the gating time relative to the total number of detected photons and thus depends on the fluorescence lifetime at that pixel for the chosen gating time and instrument response.

The respective pixel is converted into a fluorescence lifetime value using a lookup table that is calculated from a position dependent instrument response function of the pockels cell 10 modulating the polarization and from an exponential decay model and that assigns a fluorescence lifetime value to an intensity ratio. To obtain the instrument response function, the pattern angle and phase in the illumination path are kept constant and a series of frames is recorded while the delay between the excitation pulses and the gating time of the Pockels cell 10 is varied in small increments, for example from zero to about 120 ns in steps of about 400 ps. For this calibration measurement a fluorophore with a short fluorescence lifetime compared to the rise time of the Pockels cell 10 is used so that the measured ratio as a function of gating time directly reflects the temporal gating response of the system. From these calibration data, an instrument response function is determined for each detector pixel, describing how the ratio r depends on the gating time for a short lifetime reference. Assuming a mono exponential fluorescence decay model with intensity proportional to the exponential:

$$I(t) = I(0)e^{-\frac{t}{\tau}},$$

with actual time $t$ and lifetime value $\tau$. synthetic ratios are then calculated for a set of lifetime values, for example twenty lifetime values between 0 and 10 ns, by convolving the exponential decay with the pixel dependent instrument response function at the gating time used in the measurement. The resulting dependence between ratio and lifetime for each pixel is stored in the lookup table.

In a sub step S5f, during data evaluation the measured ratio r for each pixel in the raw frames is converted into an estimated fluorescence lifetime by interpolation in the lookup table.

In the static sample, lifetime values may be estimated independently for each set of raw frames recorded at different gating times, for example at the rising and falling edge of the rectangular gating pulse, and can then be averaged over all raw frames for each pixel to increase precision and reduce the influence of noise. By choosing the gating time such that the typical ratio r is close to one half, the sensitivity of the ratio to lifetime changes is maximized and the influence of background light that contributes equally to modulated and unmodulated sub-portions is minimized. In this way, super resolved intensity images and fluorescence lifetime maps can be reconstructed from the same set of raw frames. The combination of high numerical aperture, structured illumination reconstruction and electro-optic gating enables intensity and lifetime measurements at a lateral resolution of about 130 nm and frame rates on the order of about 0,12 Hz, compatible with live cell imaging in which dynamic processes in cellular membranes and organelles can be observed with simultaneous high resolution fluorescence lifetime contrast.

The project leading to this application has received funding from the European Research Council (ERC) under the European Union's Horizon Europe Programme (Grant agreement No. 101069260).

List of reference signs

| | |
|---|---|
| 1 | sample |
| 2 | microscopy system |
| 3 | illumination module |
| 4 | modulator |
| 5 | detector |
| 6 | control and evaluation unit |
| 7 | interferometer |
| 8 | scanner |
| 9 | phase modulator |
| 10 | Pockels cell |
| 11 | achromatic lens |
| 12 | beam splitter |
| 13 | retro-reflector |
| 14 | mirror |
| 15 | dichroic filter |
| 16 | objective lens |
| 17 | emission filter |
| 18 | image plane |
| 19 | tube lens |
| 20 | first polarization splitting system |
| 21 | second polarization splitting system |
| 22 | quarter-wave plate |
| 23 | first relay lens |
| 24 | beam source |
| 25 | first polarization beam splitter |
| 26 | second polarization beam splitter |
| 27 | fiber |
| 28 | second relay lens |

**Claims**

1. Method for examining a sample (1) enriched with at least one fluorophore, comprising the following steps:

exciting the sample (1) with a plurality of different interference patterns, such that the sample (1) emits in response to each interference pattern a respective fluorescence signal,
separating the respective fluorescence signal based on a degree of freedom of the respective fluorescence signal into a plurality of portions with different states of the degree of freedom,

modulating the states of the portions of each fluorescence signal within a predetermined time interval, such that each portion is detectable in the form of a modulated sub-portion and an unmodulated sub-portion, detecting the modulated and unmodulated sub-portions of each portion in the form of a respective raw frame for each fluorescence signal, and reconstructing an intensity image and a fluorescence lifetime value for each pixel of the intensity image comprising a plurality of pixels based on the raw frames.

2. Method according to claim 1, wherein the sample (1) is excited with the different interference patterns by excitation pulses, and wherein the steps of modulating the states of the portions and detecting the modulated and unmodulated sub-portions read as follows:

modulating the states of the portions of each fluorescence signal within a predetermined time interval as a function of the excitation pulses, such that each portion is detectable in the form of a modulated sub-portion and an unmodulated sub-portion, and detecting the modulated and unmodulated sub-portions of each portion as a function of the excitation pulses in the form of a respective raw frame for each fluorescence signal.

3. Method according to any one of the claims 1 or 2, wherein the step of reconstruction comprises the following further steps:

spatially overlapping the modulated sub-portions with the corresponding unmodulated sub-portions of a respective raw frame, determining reconstruction parameters based on the spatially overlapped sub-portions, and reconstructing an intensity image of the sample (1) from the raw frames and the reconstruction parameters by means of a structured-illumination reconstruction routine comprising a Wiener filter.

4. Method according to any one of the preceding claims, wherein the step of reconstruction comprises the following further steps:

spatially overlapping the sub-portions, determining, for each pixel of the raw frames, an intensity ratio between modulated sub-portions and a sum of modulated sub-portions and unmodulated sub-portions, and determining a fluorescence lifetime value for the respective pixel based on the intensity ratio.

5. Method according to any one of the preceding claims, wherein the modulation is performed at a repetition rate in the kHz to MHz range, in particular at least 1 MHz.

6. Method according to any one of the preceding claims, wherein the plurality of different interference patterns is formed by at least three, preferably five, interference patterns that are phase-shifted with respect to one another and/or at least two, preferably three, interference patterns of different orientation and/or periodicity and/or by combinations of the phase-shifted interference patterns with the interference patterns of different orientation and/or periodicity.

7. Method according to any one of the preceding claims, wherein the degree of freedom is a polarization of the fluorescence signal, and the fluorescence signal is separated into the plurality of portions of different polarization states.

8. Method according to any one of the preceding claims, wherein the modulated and unmodulated sub-portions of the portions are detected spatially separated, preferably arranged in a quadrant pattern.

9. Microscopy system (2) for examining a sample (1) enriched with at least one fluorophore, comprising

an illumination module (3) configured to excite the sample (1) with a plurality of different interference patterns, such that the sample (1) emits in response to each interference pattern a respective fluorescence signal, a modulator (4) configured to separate each fluorescence signal based on a degree of freedom of the respective fluorescence signal into a plurality of portions with different states of the degree of freedom, and to modulate the states of the portions of each fluorescence signal,

a detector (5) for detecting a respective raw frame for each fluorescence signal, and

a control and evaluation unit (6) configured to

drive the modulator (4) to perform modulation within a predetermined time interval, such that each portion is detectable in the form of a modulated sub-portion and an unmodulated sub-portion, and

reconstruct, from the raw frames comprising the sub-portions, an intensity image having a plurality of pixels and a fluorescence lifetime value for each pixel of the intensity image.

10. Microscopy system (2) according to the previous claim, wherein the illumination module (3) comprises an interferometer (7), preferably an off-axis Michelson interferometer, wherein the interferometer (7) is configured to split a laser beam into at least two coherent partial beams that are brought to interference in a sample plane of the sample (1) so that the sample (1) is excited with the interference pattern.

11. Microscopy system (2) according to the previous claim, wherein the interferometer (7) comprises a scanner (8), in particular a two-axis galvanometric scanner, by which an angle between the partial beams can be changed so that an orientation and/or a periodicity of the interference pattern is adjustable.

12. Microscopy system (2) according to any one of the previous two claims, wherein the interferometer (7) comprises an optical phase modulator (9), in particular a glass plate adjustable by a voice-coil drive, in one arm of the interferometer (7), wherein a phase of the interference pattern is adjustable with the phase modulator (9).

13. Microscopy system (2) according to any one of the previous claims 9 to 12, wherein the modulator (4) comprises, in the beam direction of the plurality of portions in the modulator (4), a Pockels cell (10), preferably a Pockels cell (10) configured in a transverse arrangement in the beam direction, the Pockels cell (10) being configured to modulate a polarization state of the plurality of portions within the predetermined time interval.

14. Microscopy system (2) according to the previous claim, wherein the Pockels cell (10) comprises a first lithium tantalate crystal and a second lithium tantalate crystal arranged sequentially in the beam direction, wherein the first lithium tantalate crystal and the second lithium tantalate crystal are arranged in the Pockels cell (10) with a predetermined orientation aligned relative to one another.

15. Microscopy system (2) according to any one of the previous claims 9 to 14, wherein the detector (5) is an area electronic image detector, in particular an sCMOS camera.

Fig. 1

Fig. 2

## EUROPEAN SEARCH REPORT

**Application Number**

EP 25 21 9273

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JOUCHET PIERRE ET AL: "Nanometric axial localization of single fluorescent molecules with modulated excitation", NATURE PHOTONICS NATURE PUBLISHING GROUP UK, LONDON, vol. 15, no. 4, 25 January 2021 (2021-01-25), pages 297-304, XP037523387, ISSN: 1749-4885, DOI: 10.1038/S41566-020-00749-9 [retrieved on 2021-01-25] | 1,6-13, 15 | INV. G06T3/4053 G01N21/64 G02B21/16 |
| Y | * abstract * | 2,3,5,14 | |
| A | * page 297, left-hand column, paragraph 1 - page 301, right-hand column, paragraph 1 * <br> * page 303, left-hand column, paragraph 4 * <br> * figures 1,5 * | 4 | |
| X | -& JOUCHET PIERRE ET AL: "Supplementary information: Nanometric axial localization of single fluorescent molecules with modulated excitation", NATURE PHOTONICS, vol. 15, no. 4, 25 January 2021 (2021-01-25), pages 1-35, XP093387961, London ISSN: 1749-4885, DOI: 10.1038/s41566-020-00749-9 | 1,6-13, 15 | TECHNICAL FIELDS SEARCHED (IPC) <br><br> G01N <br> G02B <br> G06T |
| Y | * page 32, paragraph 1 * | 2,3,5,14 | |
| A | * Equations S27 to S30 * <br> * figures S2,S5 * | 4 | |

-----

-/--

The present search report has been drawn up for all claims

| Place of search | Date of completion of the search | Examiner |
|---|---|---|
| The Hague | 16 April 2026 | Couteau, Olivier |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

**Application Number**

EP 25 21 9273

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | ADAM J. BOWMAN ET AL: "Wide-field fluorescence lifetime imaging of neuron spiking and sub-threshold activity in vivo", ARXIV.ORG PHYSICS - OPTICS, vol. 2211, 11229V2, 25 June 2023 (2023-06-25), pages 1-41, XP091546117, DOI: 10.1126/SCIENCE.ADF9725 * abstract * * page 3, paragraph 2 - page 4, paragraph 1 * * page 24, paragraph 1-3 * * figures 1,S1 * | 2,5,14 | |
| Y | CN 108 665 411 A (BEIJING CHAOWEIJING BIOLOGICAL TECH CO LTD) 16 October 2018 (2018-10-16) * abstract * * figure 1 * | 3 | |
| | | | TECHNICAL FIELDS SEARCHED (IPC) |

The present search report has been drawn up for all claims

| Place of search | Date of completion of the search | Examiner |
|---|---|---|
| The Hague | 16 April 2026 | Couteau, Olivier |

EPO FORM 1503 03.82 (P04C01)

## ANNEX TO THE EUROPEAN SEARCH REPORT
## ON EUROPEAN PATENT APPLICATION NO.

EP 25 21 9273

This annex lists the patent family members relating to the patent documents cited in the above-mentioned European search report.
The members are as contained in the European Patent Office EDP file on
The European Patent Office is in no way liable for these particulars which are merely given for the purpose of information.

16-04-2026

| Patent document cited in search report | Publication date | Patent family member(s) | Publication date |
|---|---|---|---|
| CN 108665411 A | 16-10-2018 | NONE | |

For more details about this annex : see Official Journal of the European Patent Office, No. 12/82

EPO FORM P0459